# EUROPÄISCHE PATENTSCHRIFT

(11) **EP 1 442 241 B1**
(45) Veröffentlichungstag und Bekanntmachung des Hinweises auf die Patenterteilung: **24.01.2007**
(21) Anmeldenummer: 02777319.1
(22) Anmeldetag: 19.10.2002
(51) Int. Cl.: F16H 63/18

(54) **VERFAHREN ZUM SCHALTEN EINES MEHRSTUFIGEN HANDSCHALTGETRIEBES UND MEHRSTUFIGES HANDSCHALTGETRIEBE MIT EINEM SCHALTGESTÄNGE**
METHOD FOR SHIFTING A MULTI-STAGE MANUAL GEARBOX AND A MULTI-STAGE MANUAL GEARBOX COMPRISING A GEARSHIFT LINKAGE
PROCEDE PERMETTANT LE CHANGEMENT DE VITESSES DANS UNE BOITE DE VITESSES MANUELLE A PLUSIEURS RAPPORTS, ET BOITE DE VITESSES MANUELLE A PLUSIEURS RAPPORTS COMPRENANT UNE TRINGLERIE DE TRANSMISSION

(30) Priorität: 09.11.2001 DE 10154752; 09.03.2002 DE 10210460
(43) Veröffentlichungstag der Anmeldung: 04.08.2004
(73) Patentinhaber: Conti Temic microelectronic GmbH, 90411 Nürnberg (DE)
(72) Erfinder: GENZEL, Michael, 90574 Rosstal (DE); GRAMANN, Matthias, 91233 Neunkirchen (DE); GUTH, Peter, 90562 Heroldsberg (DE); PIRNER, Hermann, 82278 Illschwang (DE)
(86) Internationale Anmeldenummer: PCT/EP2002/011721
(87) Internationale Veröffentlichungsnummer: WO 2003/040596

(56) Entgegenhaltungen:
- DE-A- 2 355 705
- DE-A- 19 543 645
- DE-C- 743 541
- GB-A- 439 948

## Beschreibung

Die Erfindung betrifft ein Verfahren zum Schalten eines mehrstufigen Handschaltgetriebes mit einem Schaltträger gemäß dem Oberbegriff des Patentanspruchs 1 sowie ein mehrstufiges Handschaltgetriebe mit einem Schaltgestänge nach Patentanspruch 3.

Bei einem mehrstufigen Handschaltgetriebe wird das Übersetzungsverhältnis geändert, in dem bei unterbrochener Kraftübertragung mittels einer Schaltvorrichtung, beispielsweise eines Schaltknüppels, der Kraftschluß zwischen auf Getriebewellen kugelgelagerten Zahnrädern hergestellt wird.

Auf einer Getriebewelle sind dabei zwei Zahnräder angeordnet, zwischen denen ein mit der Getriebewelle kraftschlüssig verbundener Synchronring angeordnet ist, der axial verschoben werden kann. Der Synchronring besteht aus einer konisch Auflauffläche und aus einem Zahnring. Das kraftschlüssige verbinden eines Zahnrades mit einer Getriebewelle erfolgt, indem der Synchronring gegen ein Zahnrad verschoben wird. Dabei wird das kugelgelagerte Zahnrad zuerst durch die konische Auflauffläche des Synchronringes auf die Umdrehungszahl der Getriebewelle beschleunigt, bevor durch weiteres axiales Verschieben des Synchronrings der Kraftschluß zwischen dem Zahnrad und dem Zahnring des Synchronrings hergestellt wird.

Das axiale Verschieben des Synchronrings erfolgt mittels einer an dem Synchronring angreifenden Schaltgabel, die mit einer Gabelwelle verbunden ist. An der Gabelwelle ist zudem ein Schaltfinger befestigt. An diesem Schaltfinger greift ein Mitnehmer an, der an einer Schaltwelle ausgebildet ist, die bei einem konventionellen Handschaltgetriebe als Schaltvorrichtung über ein Gestänge von einem Schaltknüppel betätigt wird. Die den Mitnehmer tragende Schaltwelle kann allgemein als Schaltträger bezeichnet werden.

Ein modernes Handschaltgetriebe mit sechs Gängen und einem Rückwärtsgang weist beispielsweise vier Gabelwellen auf, wobei drei Gabelwellen das Schalten der sechs Vorwärtsgänge bewirken und die vierte Gabelwelle das Schalten des Rückwärtsgangs bewirkt. Der Schaltknüppel wird in der Regel in einer Schaltkulisse mit drei Schaltgassen für die sechs Vorwärtsgänge geführt. Die Schaltgassen sind in ihrer Mitte durch eine Wahlgasse miteinander verbunden. Für den Rückwärtsgang ist beispielsweise parallel zu den Schaltgassen eine halblange Schaltgasse ausgebildet, die an einem Ende in der Wahlgasse endet.

Wird der Schaltknüppels innerhalb einer Schaltgasse bewegt, greift der Mitnehmer der Schaltwelle in genau einen Schaltfinger einer Gabelwelle, wodurch zwischen den zwei Gängen geschaltet werden kann, die über dieser Gabelwelle und den zwei unterschiedlichen Zahnrädern der zugehörigen Getriebewelle eingelegt werden können.

Bei dem Führen des Schaltknüppels in der Wahlgasse von einer Schaltgasse in eine andere Schaltgasse wird die Schaltwelle gedreht, wobei der Mitnehmer der Schaltwelle von dem Schaltfinger einer Gabelwelle zu dem Schaltfinger einer anderen Gabelwelle umgesetzt wird.

Die bei einem konventionellen Handschaltgetriebe von einem Schaltknüppel auf die Schaltwelle übertragene Bewegung wird bei einem automatisierten Handschaltgetriebe von beispielsweise zwei Elektromotoren ausgeführt. Zudem wird bei einem automatisierten Handschaltgetriebe die Kupplung des Kraftfahrzeugs von einem elektromagnetischen Aktor betätigt, wodurch ein Wechsel der Schaltstufe vom Kraftfahrer beispielsweise lediglich durch das Betätigen eines Plus/Minus -Knopfes ausgeführt werden kann.

Dabei erfolgt bei einem automatisierten Handschaltgetriebe ein Wechsel der Schaltstufe in den selben Einzelschritten, die bei einem konventionellen Handschaltgetriebe vom Kraftfahrer über das Kupplungspedal und über den Schaltknüppel ausgeführt werden.

Dabei wird bei dem automatisierten Handschaltgetriebe zuerst über den elektromagnetischen Aktor die Kupplung getrennt, dann wird über einen ersten Elektromotor die Schaltwelle zum Herausnehmen eines Ganges axial verschoben und anschließend die Schaltwelle zur Anwahl einer anderen Schaltwelle von einem zweiten Elektromotor gedreht. Danach wird die andere Schaltwelle zum Einlegen einer nächsten Schaltstufe von dem ersten Elektromotor axial verschoben, wonach die Kupplung durch den elektromagnetischen Aktor geschlossen wird. Die Koordination und Überwachung der fünf Einzelschritte erfolgt durch ein Getriebesteuergerät.

Nachteilig sind dabei insbesondere die drei zur Auswahl und zum Verschieben der Schaltwelle benötigten Einzelschritte, die aufeinander abgestimmt werden müssen, und die für einen Gangwechsel eine lange Zeitspanne in Anspruch nehmen.

Die gattungsgemäße 195 43 645 A1 beschreibt eine Vorrichtung zum Schalten von Fahrzeuggetrieben mit einer Schaltwalze, die mit über deren Oberfläche verlaufenden Schaltnuten versehen ist. Dabei ist die Schaltwalze axial verschiebbar mit einer Verdreheinrichtung verbunden. Darüber hinaus ist die Schaltwalze mit einer Federeinrichtung versehen, die diese in der Schaltposition zum Einlegen des Ganges in Richtung Synchronisierung drückt.

Von einer Schaltposition zur nächsten führt die Schaltwalze eine Bewegung aus, die eine Kombination aus einer Dreh- und einer Axialbewegung ist. Die Drehbewegung findet in Richtung der Schaltnutenachsen statt. Die Axialbewegung findet in Richtung der Gabelwellen senkrecht zu den Schaltnuten statt. Die Gänge werden sequentiell geschaltet.

Der Erfindung liegt die Aufgabe zugrunde ein Verfahren zum Schalten eines mehrstufigen Handschaltgetriebes sowie ein mehrstufiges Handschaltgetriebe mit einem Schaltgestänge gemäß dem Oberbegriff des Patentanspruchs 3 anzugeben, das bei einem Gangwechsel weniger Einzelschritte auszuführen braucht, die dementsprechend schnelle auszuführen und einfacher aufeinander abzustimmen sind. Zudem soll das mehrstufige Handschaltgetriebe einen kompakten Aufbau aufweisen.

Diese Aufgaben wird erfindungsgemäß durch die kennzeichnenden Merkmale Kennzeichen der Patentansprüche 1 und 3 gelöst.

Nach Patentanspruch 1 sind auf einem Schaltträger Schaltmittel vorgesehen, durch welche bei einem Wechsel der Schaltstufe durch eine Bewegung des Schaltträgers eine Schaltstufe herausgenommen und/oder ein weiterer Schaltstufe eingelegt wird. Dabei entspricht der Schaltträger bei einem heute gebräuchlichen Schaltgestänge der Schaltwelle. Als Schaltmittel weisen Schaltwellen heutiger Schaltgestänge einen einzelnen Mitnehmer auf.

In einer Weiterbildung des Verfahrens ist vorgesehen, daß das Handschaltgetriebe ein Schaltgestänge mit Schaltfingern aufweist, wobei die Schaltmittel an den Schaltfingern angreifen, und wobei Schaltmittel für jeden Schaltfinger vorgesehen werden.

In einer weiteren Weiterbildung des Verfahrens ist vorgesehen, daß die Schaltmittel auf dem Schaltträger in Spuren angeordnet werden, und daß so viele Spuren von Schaltmitteln auf dem Schaltträger ausgebildet werden, daß immer jeder Schaltfinger zum Einlegen einer Schaltstufe betätigt werden kann.

Nach Patentanspruch 3 ist ein mehrstufiges Handschaltgetriebe vorgesehen, das ein Schaltgestänge aus axial verschiebbaren Gabelwellen aufweist, an denen jeweils ein Schaltfinger und mindestens eine Schaltgabel befestigt sind. Zudem weist das mehrstufige Handschaltgetriebe eine einen Wechsel der Schaltstufe bewirkenden Schaltvorrichtung auf, wobei ein mit der Schaltvorrichtung verbundener Schaltträger vorgesehen ist. Auf dem Schaltträger sind als Mitnehmerpaare ausgebildete Schaltmittel angeordnet, wobei zwischen einem Mitnehmerpaar jeweils ein Schaltfinger angeordnet ist.

Die Mitnehmer der auf dem Schaltträger angeordneten Mitnehmerpaare weisen entweder einen kleinen Mitnehmerabstand oder einen großen Mitnehmerabstand auf, wobei höchstens ein Schaltfinger zwischen einem den kleinen Mitnehmerabstand aufweisenden Mitnehmerpaar angeordnet ist.

Auf dem Schaltträger sind mindestens so viele Mitnehmerpaare angeordnet, daß durch Bewegen des Schaltträgers jeder Schaltfinger zwischen einem den kleinen Mitnehmerabstand aufweisenden Mitnehmerpaar angeordnet werden kann, wobei alle nicht zwischen einem den kleinen Mitnehmerabstand aufweisenden Mitnehmerpaar angeordneten Schaltfinger zwischen einem den großen Mitnehmerabstand aufweisenden Mitnehmerpaar angeordnet sind.

In einer Weiterbildung des Handschaltgetriebes ist vorgesehen, daß das Handschaltgetriebe ein Gehäuse aufweist, und daß in dem Gehäuse Kipphebel gelagert sind, wobei für jedes Mitnehmerpaar zwei Kipphebel vorgesehen sind, die an einer Seite auf einem Mitnehmer aufliegen, und an der anderen Seite auf einem Schaltfinger aufliegen, und die bei einem über die Schaltvorrichtung zum Wechsel der Schaltstufe herbeigeführten Verschieben des Schaltträgers ein Verschieben der Schaltfinger gegen die Bewegungsrichtung des Schaltträgers bewirken.

In einer weiteren Weiterbildung des Handschaltgetriebes ist vorgesehen, daß die Mitnehmerpaare auf dem Schaltträger in Spuren angeordnet sind, und daß zwischen Spuren von Mitnehmerpaaren Leerspuren ausgebildet sind, die keine Mitnehmerpaare aufweisen.

In einer nächsten Weiterbildung des Handschaltgetriebes ist vorgesehen, daß auf dem Träger mindestens eine zusätzlich Spur mit nur den großen Abstand aufweisenden Mitnehmerpaaren angeordnet ist.

Die einen Wechsel der Schaltstufe bewirkenden Schaltvorrichtung ist dabei als ein in einer Schaltkulisse geführter Schalthebel und/oder als Plus/Minus - Knopf und/oder als Auf/Ab - Hebel ausgebildet, der den Schaltträger mechanisch über ein Gestänge oder elektronisch über mindestens einen Elektromotor bewegt.

Der Schaltträger kann beispielsweise als ebenes Rechteck ausgebildet sein, das zum Wechsel der Schaltstufe in der Ebene des Rechtecks verschiebbar ist.

Alternativ ist der Schaltträger als Zylinder ausgebildet, der parallel zu den Gabelwellen angeordnet ist, und der zum Wechsel der Schaltstufe drehbar und axial verschiebbar ist.

In einer letzten Weiterbildung des Handschaltgetriebes ist vorgesehen, daß in dem Getriebegehäuse zur Drehung des Schaltträgers ein erster Elektromotor angeordnet ist, und daß und zum axialen Verschieben des Schaltträgers ein zweiter Elektromotor oder eine elektromechanische Stellvorrichtung angeordnet ist.

Das beschriebene Verfahren zum Schalten eines mehrstufigen Handschaltgetriebes und das mehrstufiges Handschaltgetriebe mit einem Schaltgestänge ermöglichen ein schnelleres Durchführen des Wechsels einer Schaltstufe.

Im folgenden ist das erfindungsgemäße Verfahren zum Schalten eines mehrstufigen Handschaltgetriebes anhand von drei Ausführungsbeispielen im Zusammenhang mit sechs Figuren dargestellt und erläutert, bei dem als Schaltmittel von Kipphebeln betätigte Mitnehmerpaare auf dem Schaltträger angeordnet sind.

Es zeigen:
- Figur 1: eine schematische Darstellung eines mechanisch betätigten, rechteckig ausgeführten Schaltträgers, auf dem als Schaltmittel von Kipphebeln betätigte Mitnehmerpaare auf dem Schaltträger angeordnet sind,
- Figur 1a: eine schematische Darstellung der Anordnung von Mitnehmerpaaren auf dem Schaltträger für vier in einer Reihe angeordnete Schaltfinger,
- Figur 1b-1h: schematische Darstellungen der Seitenansichten der Schaltfinger und der Kipphebel beim Einlegen und beim Herausnehmen einer Schaltstufe,
- Figur 2: eine schematische Darstellung eines zylindrisch ausgeführten Schaltträgers, bei dem die Mitnehmerpaare vier in einer Reihe angeordnete Schaltfinger betätigen,
- Figur 3: eine schematische Darstellung eines elektromotorisch betätigten, zylindrischen Schaltträgers, bei dem die Mitnehmerpaare vier Schaltfinger betätigen, die in zwei Reihen nebeneinander angeordnet sind,
- Figur 3a: eine schematische Darstellung der Anordnung von Mitnehmerpaaren auf dem Schaltträger für vier in zwei Reihen angeordnete Schaltfinger, wobei die Schaltfinger zwischen Spuren von Mitnehmerpaaren stehen, die auf dem Schaltträger nebeneinander angeordnet sind,
- Figur 3b: eine schematische Darstellung der Anordnung von Mitnehmerpaaren auf dem Schaltträger für vier in zwei Reihen angeordnete Schaltfinger, wobei die Schaltfinger zwischen Spuren von Mitnehmerpaaren stehen, zwischen denen sich eine weitere Spur von Mitnehmerpaaren befindet,
- Figur 4: eine schematische Darstellung eines elektromotorisch betätigten, zylindrisch ausgeführten Schaltträgers, bei dem die Mitnehmerpaare vier Schaltfinger betätigen, die alle radial um den Schaltträger nebeneinander angeordnet sind,
- Figur 4a: eine schematische Darstellung der Anordnung von Mitnehmerpaaren auf dem Schaltträger für vier radial um den Schaltträger angeordnete Schaltfinger.

Bei einem Handschaltgetriebe für ein Kraftfahrzeug mit sechs Vorwärtsgängen und einem Rückwärtsgang sind in dem Gehäuse des Handschaltgetriebes vier parallele Getriebewellen angeordnet. Das Handschaltgetriebe weist ein Schaltgestänge auf, das aus vier parallel zu den Getriebewellen angeordneten Gabelwellen besteht, die jeweils einen Schaltfinger und eine Schaltgabel aufweisen.

Für die sechs Vorwärtsgänge des Handschaltgetriebes sind auf drei Getriebewellen jeweils zwei unterschiedliche Zahnräder und ein Synchronring angeordnet. Für den Rückwärtsgang ist auf der vierten Gabelwelle ein Zahnrad angeordnet. Die Zahnräder sind beispielsweise über Walzenlager mit der Getriebewelle verbunden und können sich gegenüber der Getriebewelle frei drehen.

Eine Schaltstufe wird geschaltet, indem über einen Schaltfinger eine auf einer Gabelwelle angeordnete Schaltgabel einen mit der Getriebewelle verbundenen Synchronring axial verschiebt. Der Synchronring weist eine konische Auflauffläche und einen Zahnring auf. Bei dem Verschieben des Synchronrings wird zuerst das Zahnrad, mit dem ein Kraftschluß hergestellt werden soll, an die Umdrehungsgeschwindigkeit der Getriebewelle angeglichen, indem die konische Auflauffläche des Synchronring gegen eine entsprechende Auflauffläche des Zahnrades verschoben wird. Durch das weitere Verschieben des Synchronrings verzahnen sind der Zahnring des Synchronrings und das Zahnrad miteinander, wodurch der Kraftschluß zwischen dem Zahnrad und der Getriebewelle hergestellt ist.

Durch diese Anordnung der Zahnräder auf den Getriebewellen weisen ein Synchronring sowie die zugehörige Gabelwelle mit der mindestens einen Schaltgabel und dem Schaltfinger genau drei Schaltpositionen auf, in denen diese Anordnung stehen kann. Diese drei Schaltpositionen können beispielsweise über eine Raste fixiert werden, die an den Getriebewellen, den Gabelwellen und/oder an dem Schalträger ausgebildet ist. Die Raste besteht beispielsweise aus einer Stahlkugel, die von einer Feder in eine von drei kugelförmigen Ausformung verschoben wird, die in den Getriebewellen, den Gabelwellen und/oder in dem Schaltträger ausgebildet sind. Die kugelförmigen Ausformungen weisen als Tiefe beispielsweise etwa ein drittel des Durchmessers der Stahlkugel auf.

Die drei Schaltpositionen bestehen aus einer Mittelstellung, in der über die Getriebewelle kein Kraftschluß mit einem Zahnrad hergestellt ist, und zwei weiteren Stellungen, in denen der Kraftschluß zwischen der Getriebewelle und einem der zwei Zahnräder hergestellt ist.

Dementsprechend muß der Schaltträger die Schaltfinger des Schaltgestänges in genau drei Schaltpositionen schieben können, wobei zu einem Zeitpunkt immer nur ein Kraftschluß zu einem Zahnrad hergestellt sein darf. Ist an einer Getriebewelle ein Kraftschluß über einen Synchronring hergestellt, müssen alle anderen Synchronringe und ihre zugeordneten Schaltfinger, Schaltgabeln und Schaltwellen in der Mittelstellung angeordnet sein.

Zum Schalten des Handschaltgetriebes sind als Schaltmittel auf einem Schaltträger Mitnehmerpaare angeordnet. Zudem sind als Schaltmittel für jeden Schaltfinger zwei Kipphebel vorgesehen, die drehbar auf einer Kippachse angeordnet sind, die in dem Gehäuse des Handschaltgetriebes gelagert ist. Die Kipphebel liegen an einer Seite auf einem Mitnehmer auf, und an der anderen Seite auf einem Schaltfinger. Die Position der Kippachse im Kipphebel ist so gewählt, daß ein durch einen Kipphebel verschobener Schaltfinger den selben Weg zurücklegt wie der Schaltträger. Dabei wird jeder Kipphebel beispielsweise mittels einer Federklammer in einer Ruhestellung gehalten, in der die Kipphebel etwa senkrecht über dem Schaltträger angeordnet sind, und in der die Kipphebel in etwa parallel zueinander angeordnet sind.

Auf dem Schaltträger kommen genau zwei verschiedene Arten von Mitnehmerpaaren vor, die sich durch den Abstand der zwei Mitnehmer eines Mitnehmerpaars voneinander unterscheiden. Die erste Art von Mitnehmerpaaren weist einen kleinen Mitnehmerabstand auf, die zweite Art von Mitnehmerpaaren weist großen Mitnehmerabstand auf.

Die Mitnehmerpaare mit dem kleinen Mitnehmerabstand dienen dem Verschieben eines Schaltfingers zum Einlegen einer Schaltstufe. Die Mitnehmerpaare mit dem großen Mitnehmerabstand dienen dem Verschieben eines Schaltfingers zum Herausnehmen einer Schaltstufe. Dabei erfolgt das Verschieben des Schaltfingers zum Herausnehmen einer Schaltstufe entweder direkt durch einen Mitnehmer, oder es erfolgt durch einen Kipphebel, der von einem Mitnehmer verschoben wird.

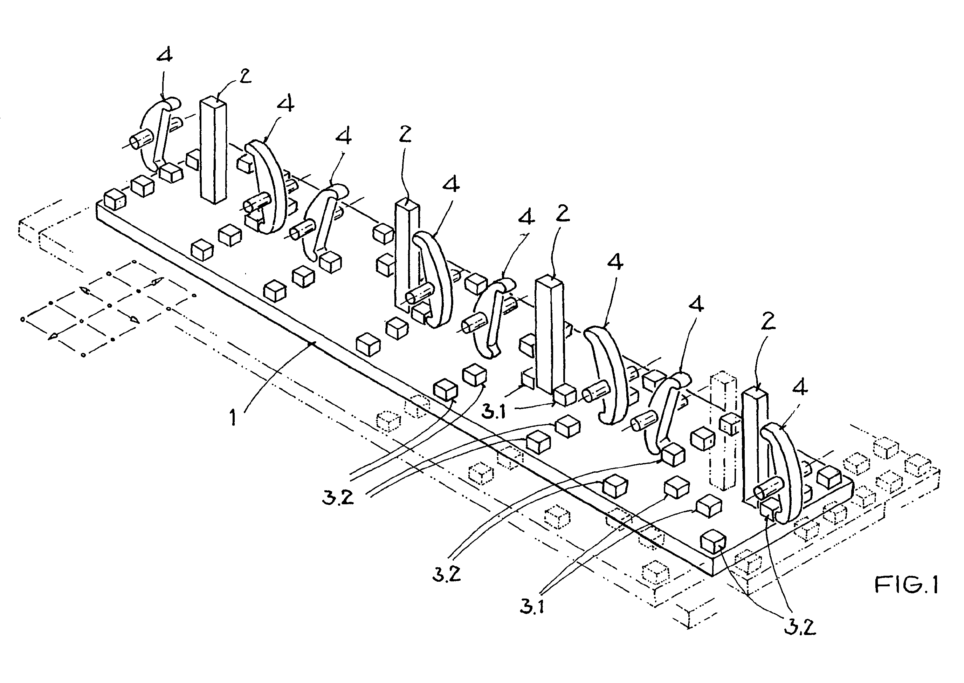

Eine eingelegte Schaltstufe wird immer dann direkt von einem Mitnehmer in die Mittelstellung verschoben, wenn der Schaltträger den Schaltfinger der neu einzulegenden Schaltstufe und den Schaltfinger der eingelegten Schaltstufe in die selbe Richtung verschieben muß (Figur 1g).

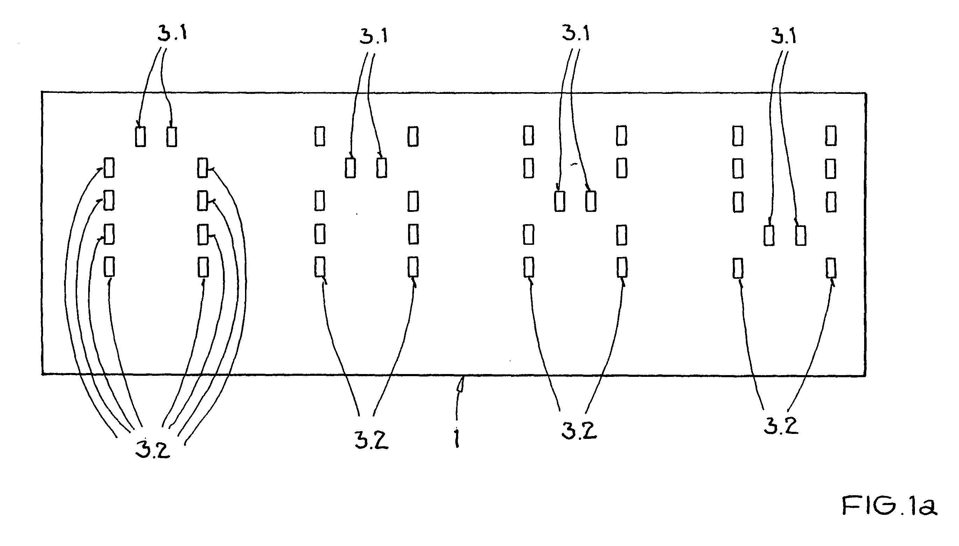

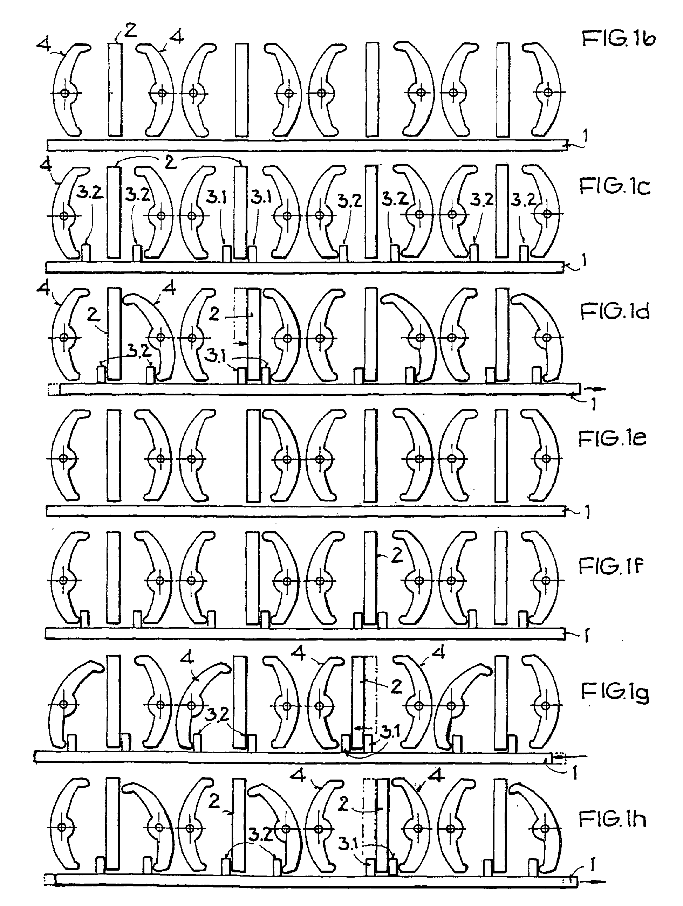

Müssen zum Wechsel der Schaltstufe die neu einzulegende Schaltstufe und die bereits eingelegte Schaltstufe in die entgegengesetzte Richtung verschoben werden, erfolgt das Herausnehmen der eingelegten Schaltstufe über einen Kipphebel, der eine Umkehrung der Bewegungsrichtung eines Mitnehmers bewirkt, und der den Schaltfinger in die entgegengesetzte Bewegungsrichtung des Schaltträgers verschiebt (Figur 1 h).

Figur 1 zeigt den Schaltträger 1 für ein Handschaltgetriebe, bei dem die Schaltfinger 2 des Schaltgestänges nebeneinander in einer Reihe angeordnet sind. In dieser Reihe sind ebenfalls die jedem Schaltfinger 2 zugeordneten zwei Kipphebel 4 angeordnet. Dabei ist der Schaltträger 1 als rechteckige Platte ausgebildet, auf dem die den großen Mitnehmerabstand und die den kleinen Mitnehmerabstand aufweisenden Mitnehmerpaare 3.1, 3.2 ausgebildet sind.

Durch die in einer Reihe angeordneten Schaltfinger 2 bilden die Mitnehmerpaare 3.1, 3.2 auf dem Schaltträger 1 parallel zu den Schaltfingern 2 und den Kipphebeln 4 Spuren. Dabei ist jeder Schaltfinger 2 zwischen den Mitnehmern eines Mitnehmerpaars 3.1, 3.2 einer Spur angeordnet. Jede Spur von Mitnehmerpaaren 3.1, 3.2 weist dabei nur ein den kleinen Mitnehmerabstand aufweisendes Mitnehmerpaar 3.1 auf, welches das Einlegen einer Schaltstufe bewirkt. Daraus folgt, daß auf dem Schaltträger 1 mindestens so viele Spuren von Mitnehmerpaaren angeordnet sind, daß durch Bewegen des Schaltträgers 1 senkrecht zu den Spuren jeder Schaltfinger 2 zwischen einem den kleinen Mitnehmerabstand aufweisenden Mitnehmerpaar 3.1 angeordnet werden kann. Bei einem Schaltgestänge mit vier in einer Reihe angeordneten Schaltfingern 2 sind dies vier Spuren von Mitnehmerpaaren 3.1, 3.2.

Zu diesen vier Spuren von Mitnehmerpaaren, von denen immer genau ein Mitnehmerpaar 3.1 den kleinen Mitnehmerabstand aufweist, kann eine fünfte Spur von nur den großen Mitnehmerabstand aufweisenden Mitnehmerpaaren 3.2 auf dem Schaltträger 1 angeordnet sein. Wird die Spur aus nur den großen Mitnehmerabstand aufweisenden Mitnehmerpaaren 3.2 gewählt und der Schaltträger 1 in eine der beiden Richtungen axial verschoben, bewirkt dies, daß eine über einen Schaltfinger 2 eingelegte Schaltstufe herausgenommen wird, egal, über welchen Schaltfinger 2 die Schaltstufe eingelegt war. Die Spur, die nur den großen Mitnehmerabstand aufweisenden Mitnehmerpaare 3.2 enthält, kann daher als Leerlaufspur bezeichnet werden. Die Leerlaufspur wird beispielsweise bei der Inbetriebnahme des Kraftfahrzeugs angewählt und dann der Schaltträger 1 in eine Richtung axial verschoben. Danach ist sichergestellt, daß sich alle Schaltfinger 2 in der Mittelposition befinden.

Die einem Schaltfinger 2 zugeordneten Mitnehmerpaare 3.1, 3.2, die senkrecht zu den Spuren auf dem Schaltträger 1 angeordnet sind, bilden Gruppierungen von Mitnehmerpaaren 3.1, 3.2, wobei eine Gruppierung immer genau ein den kleinen Mitnehmerabstand aufweisendes Mitnehmerpaar 3.1 enthält. Sind die Schaltfinger 2 in einer Reihe angeordnet, dann müssen die den kleinen Mitnehmerabstand aufweisenden Mitnehmerpaare 3.1 der Gruppierungen in unterschiedlichen Spuren angeordnet sein.

Ein Handschaltgetriebe mit vier in einer Reihe angeordneten Schaltfingern 2 weist dementsprechend vier Gruppierungen von Mitnehmerpaaren 3.1, 3.2 auf.

Der als rechteckige Platte ausgebildete Schaltträger 1 kann in einer einfachen Ausführung nur in seiner x - Richtung und y - Richtung der Ebene des rechteckigen Schaltträgers 1 bewegt werden, so daß der Abstand zwischen den Schaltfingern 2 und dem Schaltträger 1 immer gleich bleibt. Der Schaltträger 1 wird dazu beispielsweise über ein Gestänge von einem Schalthebel bewegt.

Bei dieser Ausführung sind zwischen den Spuren Leerspuren ausgebildet, innerhalb denen keine Mitnehmerpaare 3.1, 3.2 angeordnet sind. Die Leerspuren ermöglichen das Verschieben des Schaltträgers 1, ohne daß die Schaltfinger 2 oder die Kipphebel 4 an den Mitnehmerpaaren 3.1, 3.2 hängen bleiben.

In der Figur 1a ist ein Schaltträger 1 für vier in einer Reihe angeordnete Schaltfinger dargestellt, der fünf Spuren von Mitnehmerpaaren aufweist, wobei die Mitnehmerpaare 3.1, 3.2 auf dem Schaltträger 1 vier Gruppierungen bilden.

Dabei ist zu sehen, daß vier der von den Mitnehmerpaaren 3.1, 3.2 gebildeten Spuren genau ein den kleinen Mitnehmerabstand aufweisendes Mitnehmerpaar 3.1 enthalten, wobei alle vier den kleinen Mitnehmerabstand aufweisende Mitnehmerpaare 3.1 in unterschiedlichen Spuren angeordnet sind. Dadurch ist gewährleistet, daß wenn ein Schaltfinger 2 zwischen einem den kleinen Mitnehmerabstand aufweisenden Mitnehmerpaar 3.1 zum Einlegen einer Schaltstufe steht, daß alle anderen Schaltfinger 2 zwischen einem den großen Mitnehmerabstand aufweisenden Mitnehmerpaar 3.2 zum Herausnehmen einer Schaltstufe stehen.

Die fünfte Spur ist als Leerlaufspur ausgebildet, die nur die den großen Mitnehmerabstand aufweisende Mitnehmerpaare 3.2 enthält.

Zum Einlegen einer Schaltstufe wird zuerst der Schaltträger 1 in seiner Ebene senkrecht zu den von den Mitnehmerpaaren 3.1, 3.2 gebildeten Spuren verschoben, bis daß der Schaltfinger 2, der die gewünschte Schaltstufe, beispielsweise den ersten Gang, schaltet, zwischen einem den kleinen Mitnehmerabstand aufweisenden Mitnehmerpaar 3.1 steht.

Danach wird der rechteckige Schaltträger 1 in die Richtung der Spuren verschoben, in welcher der erste Gang auf der zum Schaltfinger 2 zugehörigen Getriebewelle angeordnet ist. Dabei verschiebt ein Mitnehmer des den kleinen Mitnehmerabstand aufweisende Mitnehmerpaares 3.1 die Anordnung aus Schaltfinger 2, Gabelwelle, Schaltgabel und Synchronring, bis das den ersten Gang bildende Zahnrad mit seiner Getriebewelle kraftschlüssig verbindet ist.

Die anderen Schaltfinger 2, die in ihrer Mittelposition zwischen den großen Mitnehmerabstand aufweisenden Mitnehmerpaaren stehen, verbleiben in ihrer Position.

Anschließen kann der rechteckige Schaltträger 1 in seiner Ebene senkrecht zu den von den Mitnehmerpaaren 3.1, 3.2 gebildeten Spuren verschoben werden, bis die Schaltfinger 2 innerhalb einer Leerspur stehen. In einer Leerspur stehend kann der Schaltträger 1 in der Achse der Spuren verschoben werden, ohne an einem Mitnehmer hängen zu bleiben. Danach kann der rechteckige Schaltträger 1 in seiner Ebene wieder soweit in Richtung der Spuren verschoben werden, daß die Schaltfinger 2 mittig zwischen den Mitnehmerpaaren 3.1, 3.2 stehen.

Ob und wie weit der Schaltträger 1 nach dem Verschieben eines Schaltfingers 2 verfahren wird ist von der Konstruktion und den Spezifikationen des Getriebes abhängig.

Nun soll der zweite Gang eingelegt werden, wobei das den zweiten Gang bewirkende Zahnrad der auf der selben Getriebewelle angeordnet ist wie das den ersten Gang bewirkende Zahnrad. Dazu wird wieder der rechteckige Schaltträger 1 soweit in der Ebene des Schaltträgers 1 verschoben, bis der Schaltfinger 2 der Getriebewelle für den ersten und zweiten Gang zwischen dem den kleinen Mitnehmeräbstand aufweisenden Mitnehmerpaar 3.1 steht.

Dann verschiebt der rechteckige Schaltträger 1 über einen Mitnehmer die Anordnung aus Schaltfinger 2, Schaltwelle und Schaltgabel soweit, daß der Synchronring den Kraftschluß mit dem Zahnrad für den ersten Gang löst, das Zahnrad des zweiten Ganges über die Auflaufflächen des Synchronrings beschleunigt und den Kraftschluß mit dem Zahnrad des zweiten Gang herstellt.

Soll nun der dritte Gang eingelegt werden, der auf einer anderen Getriebewelle als der zweite Gang angeordnet ist. Dabei muß vor dem Herbeiführen des Kraftschlusses zwischen dem den dritten Gang bewirkenden Zahnrad und dessen Getriebewelle der Kraftschluß zwischen dem den zweiten Gang bewirkenden Zahnrades und dessen Getriebewelle getrennt werden.

Dazu wird der rechteckige Schaltträger 1 dieses mal soweit parallel und senkrecht zur Gabelwellenachse verschoben, bis der Schaltfinger 2 der das Zahnrad für den dritten Gang tragenden Getriebewelle zwischen dem den kleinen Mitnehmerabstand aufweisenden Mitnehmerpaar 3.1 steht.

Danach wird der rechteckige Schaltträger 1 in der Ebene des Schaltträgers 1 in der Richtung der Spuren verschoben, in welcher das den dritten Gang bewirkende Zahnrad auf dessen Getriebewelle angeordnet ist. Nun wird der zweite Gang über ein den großen Mitnehmerabstand aufweisendes Mitnehmerpaar 3.2, gegebenenfalls unter Mitwirkung eines Kipphebels 4, herausgenommen, während zeitgleich der dritte Gang über ein den kleinen Mitnehmerabstand aufweisendes Mitnehmerpaar 3.1 eingelegt wird.

Wird der rechteckige Schaltträger 1 aus seiner Mittelstellung heraus zur einen oder zur anderen Seite verschoben, in der die Kipphebel 4 an einem Mitnehmer der Mitnehmerpaare 3.2 angelehnt sind, werden immer die Hälfte der Kipphebel 4 aus ihrer Ruhestellung gebracht. Beim Verschieben des rechteckigen Schaltträgers 1 senkrecht zu den von den Mitnehmerpaaren 3.1, 3.2 gebildeten Spuren gleiten die Mitnehmer von den Kipphebeln 4 ab und kehren durch die Federklammern in ihre Ruhestellung zurück.

Daß die Trennung des Kraftschlusses bei dem Herausnehmen der eingelegten Schaltstufe vor dem Herstellen des Kraftschlusses bei der einzulegenden Schaltstufe erfolgt, wird beispielsweise durch ein geringfügiges Abstandsspiel erreicht, das zwischen den Synchronringen und den zwei Zahnrädern besteht, die zusammen auf einer Getriebewelle angeordnet sind.

In den Figuren 1b bis 1h ist das Einlegen und das Herausnehmen einer Schaltstufe mittels vier Gruppierungen aufweisenden Schaltträgers 1 bei einem Handschaltgetriebe mit vier Schaltfingern 2 sowie die Funktion der Kipphebel 4 dargestellt.

Die Figur 1b zeigt in einer Seitenansicht die vier Schaltfinger 2 mit ihren jeweils zwei Kipphebeln 4, wobei der Schaltträger 1 immer im Schnitt unterhalb der Schaltfinger 2 dargestellt ist. Die Schaltfinger 2 stehen alle in ihrer Mittelposition, woran erkennbar ist, daß derzeit keine Schaltstufe eingelegt ist. Auf dem Schaltträger 1 sind keine Mitnehmerpaare dargestellt, was bedeutet, daß die Schaltfinger 2 über einer Leerspur stehen, von der aus die zum Einlegen einer Schaltstufe benötigte Spur von Mitnehmerpaaren 3.1, 3.2 angefahren wird.

Die Figur 1c zeigt eine Seitenansicht, nachdem der Schaltträger 1 in seiner Ebene soweit verschoben wurde, bis der zweite Schaltfinger 2 von links zwischen den Mitnehmern eines den kleinen Mitnehmerabstand aufweisenden Mitnehmerpaars 3.1 zum Einlegen einer Schaltstufe steht.

Die Figur 1d zeigt eine Seitenansicht, nachdem der Schaltträger 1 nach rechts verschoben wurde, wodurch über den zweiten Schaltfinger 2 von links eine Schaltstufe eingelegt wurde. Durch das Verschieben des Schaltträgers 1 wurden zudem die drei Kipphebel 4 ausgelenkt, die rechts von den drei Schaltfingern 2 stehen, die zwischen einem den großen Mitnehmerabstand aufweisenden Mitnehmerpaar 3.2 stehen. Da diese drei Schaltfinger 2 in ihrer Mittelposition stehen erfolgt durch die Kipphebel 4 kein Verschieben eines Schaltfingers 2.

Die Figur 1e zeigt eine Seitenansicht, nachdem der Schaltträger 1 wieder in eine Leerspur gefahren und in seine Mittelstellung zurückgekehrt ist. Dabei sind auch die drei ausgelenkten Kipphebel 4 von den Mitnehmern der drei den großen Mitnehmerabstand aufweisenden Mitnehmerpaaren 3.2 abgeglitten und durch die Rückstellkraft ihrer Federklammer ihre Ausgangsposition zurückgekehrt.

Die Figur 1f zeigt eine Seitenansicht, nachdem der Schaltträger 1 in seiner Ebene soweit verschoben wurde, bis der dritte Schaltfinger 2 von links zwischen einem den kleinen Mitnehmerabstand aufweisenden Mitnehmerpaar 3.1 zum Einlegen einer Schaltstufe steht. Über den zweiten Schaltfinger 2 von links ist dabei immer noch eine Schaltstufe eingelegt, wobei an diesem Schaltfinger 2 nun der rechte Mitnehmer eines den großen Mitnehmerabstand aufweisenden Mitnehmerpaars 3.2 steht.

Die Figur 1g zeigt eine Seitenansicht ausgehend von Figur 1f, nachdem der Schaltträger 1 nach links verschoben wurde, wodurch über den dritten Schaltfinger 2 von links eine Schaltstufe eingelegt wurde, und wodurch zeitgleich die über den zweiten Schaltfinger 2 von links eingelegte Schaltstufe herausgenommen wurde, indem der rechts am zweiten Schaltfinger 2 von links stehende Mitnehmer diesen Schaltfinger 2 in seine Mittelstellung verschoben hat. Durch das Verschieben des Schaltträgers 1 wurden zudem die drei Kipphebel 4 ausgelenkt, die links von den drei Schaltfingern 2 stehen, die zwischen einem den großen Mitnehmerabstand aufweisenden Mitnehmerpaar 3.2 stehen. Dabei fixiert der zum zweiten Schaltfingers 2 von links gehörende Kipphebel 4 die Mittelstellung des in die Mittelstellung zurückgeschobenen zweiten Schaltfingers 2 von links.

Die Figur 1h zeigt eine Seitenansicht ausgehend von Figur 1f, nachdem der Schaltträger 1 nach rechts verschoben wurde, wodurch über den dritten Schaltfinger 2 von links die andere mögliche Schaltstufe eingelegt wurde, und wodurch zeitgleich die über den zweiten Schaltfinger 2 von links eingelegte Schaltstufe herausgenommen wurde. Das Herausnehmen der Schaltstufe erfolgt nunmehr über den rechts von dem zweiten Schaltfinger 2 von links angeordneten Kipphebel 4, der den zweiten Schaltfinger 2 gegen den sich nach rechts bewegenden Schaltträger 1 nach links in seine Mittelstellung verschiebt.

Bei einer komplexeren Ausführung des als rechteckige Platte ausgebildeten Schaltträgers wird die rechteckige Platte vor dem Verschieben in der Plattenebene zuerst durch eine Hebevorrichtung abgesenkt, wobei sich der Abstand des Schaltträgers zu den Schaltfingern vergrößert. Dadurch kann der rechteckige Schaltträger nicht nur in der x - Richtung und in der y - Richtung sondern auch Diagonal in der Ebene der rechteckigen Platte verschoben werden. Danach wird der rechteckige Schaltträger wieder durch die Hebevorrichtung zu den Schaltfingern hin gehoben.

Der Vorteil dieser Anordnung besteht darin, daß das Verschieben des rechteckigen Schaltträgers schneller erfolgt. Zudem besteht keine Gefahr, daß beim Verschieben des Schaltträgers ein Mitnehmer eines Mitnehmerpaares an einem Schaltfinger oder an einem Kipphebel hängen bleibt. Zudem kann eine kompaktere Anordnung der Mitnehmerpaare erreicht werden, da auf Leerspuren verzichtet werden kann.

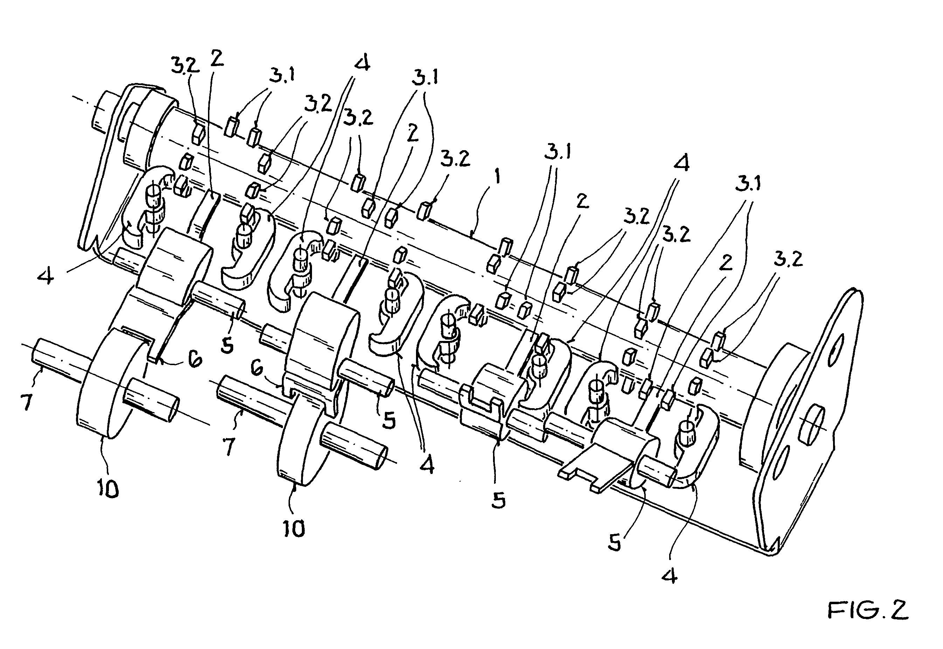

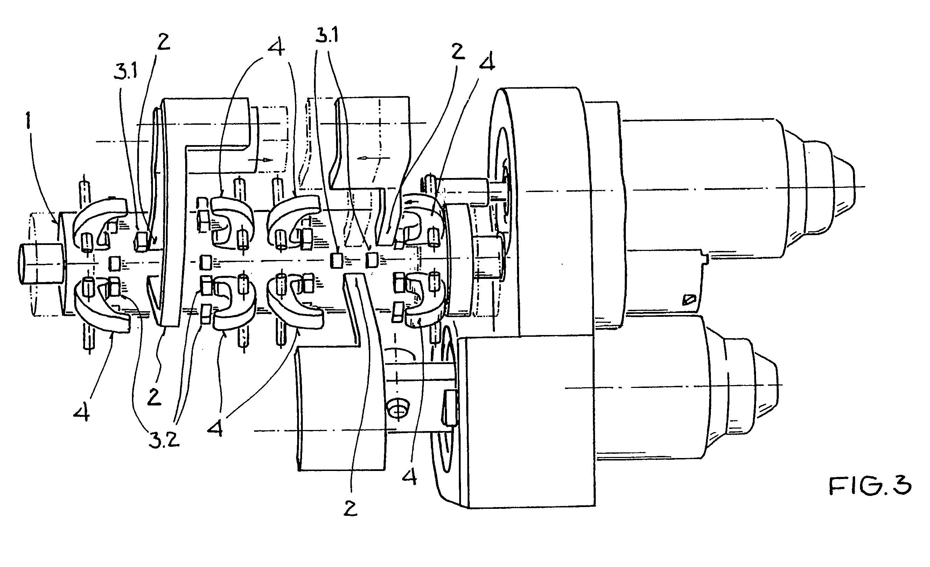

Der in der Figur 2 dargestellte Schaltträger 1 ist als Zylinder ausgeführt, auf dem als Schaltmittel die Mitnehmerpaare 3.1, 3.2 und die Kipphebel 4 angeordnet sind. Der zylindrisch ausgeführte Schaltträger 1 ist parallel zu den Gabelwellen 5 und den Getriebewellen 7 angeordnet. Zur Anwahl der benötigten Spur von Mitnehmerpaaren 3.1, 3.2 wird der zylindrisch ausgeführte Schaltträger 1 gedreht. Zum Einlegen bzw. Herausnehmen einer Schaltstufe wird der Zylinder axial verschoben, wodurch mindestens eine Anordnung aus Schaltfinger 2, Gabelwelle 5, Schaltgabel 6 und dem auf der Getriebewelle 7 befestigten Synchronring 10 axial verschoben wird.

Die Anordnung der vier Gruppierungen bildenden Mitnehmerpaare 3.1, 3.2 auf dem Schaltträger 1 entspricht der in Figur 1 a dargestellten Anordnung, wenn man den Mantel des als Zylinder ausgeführten Schaltträgers 1 aufwickelt.

Das Einlegen und das Herausnehmen einer Schaltstufe mittels eines zylindrischen Schaltträgers 1 über die Schaltfinger 2 und die Kipphebel 4 erfolgt analog zu den in den Figuren 1 b bis 1 h dargestellten Abläufen.

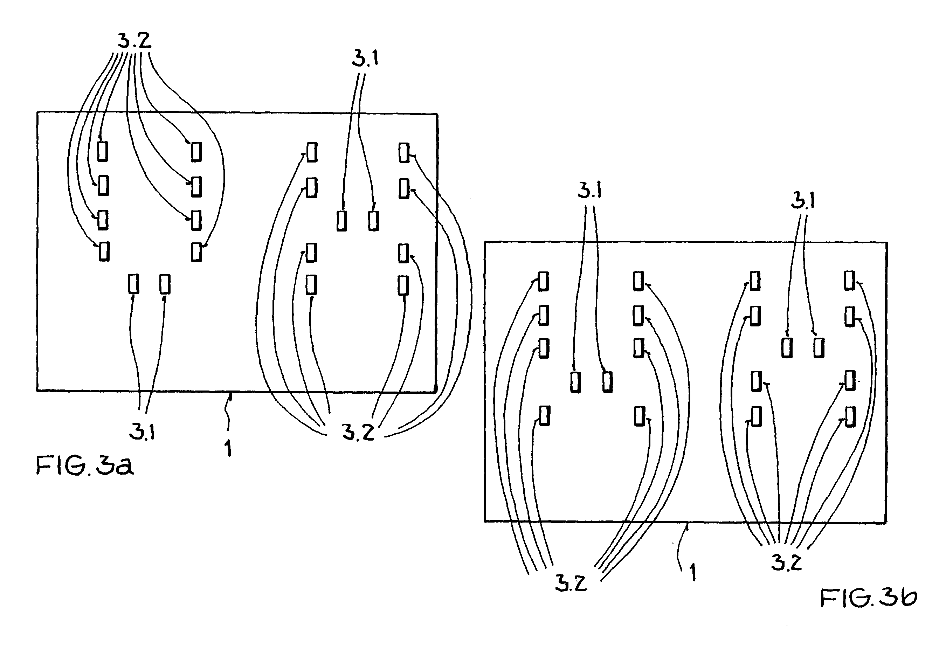

In der Figur 3 ist ebenfalls ein als Zylinder ausgeführter Schaltträger 1 dargestellt, der ebenso vier Schaltfinger 2 mit jeweils zwei Kipphebeln 4 betätigt. Aufgrund der Konstruktion des Handschaltgetriebes sind dabei jedoch zwei mal zwei Schaltfinger 2 nebeneinander angeordnet, wobei wieder jeder Schaltfinger 2 zwischen zwei im Gehäuse des Handschaltgetriebes gelagerten Kipphebeln 4 angeordnet ist.

Dabei werden immer zwei Schaltfinger 2 von einer den zylindrischen Schaltträger 1 radial umgebenden Gruppierung betätigt, wobei jede Gruppierung genau ein den kleinen Mitnehmerabstand aufweisendes Mitnehmerpaar 3.1 enthält. Daraus folgt, daß der zylindrisch ausgeführte Schaltträger 1 nur die halbe Länge aufzuweisen braucht, wobei trotzdem die volle Funktionalität des in der Figur 2 beschriebenen Schaltträgers 1 gegeben ist.

Zum Einlegen oder Herausnehmen einer Schaltstufe wird der zylindrisch ausgeführte Schaltträger 1 zur Anwahl der benötigten Spur von Mitnehmerpaaren von einem ersten Elektromotor 8 gedreht. Zum Verschieben der Schaltfinger 2 wird der zylindrische Schaltträger 1 von einem zweiten Elektromotor 9 oder von einer elektromagnetischen Stellvorrichtung axial verschoben.

In der Figur 3a ist eine Anordnung der auf dem Schaltträger 1 Spuren bildenden Mitnehmerpaare 3.1, 3.2 für vier in zwei Reihen angeordnete Schaltfinger dargestellt. Der Schaltträger 1 wird lediglich von zwei Gruppierungen von Mitnehmerpaaren 3.1, 3.2 gebildet. Dabei sind zwischen den Mitnehmern der Mitnehmerpaare 3.1, 3.2 einer Gruppierung immer zwei Schaltfinger angeordnet. Es ist zu sehen, daß jede Gruppierung von Mitnehmerpaaren 3.1, 3.2 genau ein den kleinen Mitnehmerabstand aufweisendes Mitnehmerpaar 3.1 enthält, wodurch jeder der vier Schaltfinger zum Einlegen einer Schaltstufe von einem den kleinen Mitnehmerabstand aufweisenden Mitnehmerpaar 3.1 gegriffen und verschoben werden kann. Sofern die Schaltfinger in einer zu den Spuren parallelen Reihe angeordnet sind, dürfen die den kleinen Mitnehmerabstand aufweisenden Mitnehmerpaare nicht in der gleichen Spur angeordnet sein.

Die in Figur 3a dargestellte Anordnung von den großen und den kleinen Mitnehmerabstand aufweisenden Mitnehmerpaare 3.1, 3.2 entspricht dem Fall, daß die zwei Schaltfinger einer Gruppierung so geformt und über dem Schaltträger 1 angeordnet sind, daß die zwei Schaltfinger zwischen benachbarten Spuren von Mitnehmerpaaren 3.1, 3.2 stehen.

Die Leerlaufspur, die kein den kleinen Mitnehmerabstand aufweisendes Mitnehmerpaar enthält, wird nur von zwei den großen Mitnehmerabstand aufweisenden Mitnehmerpaaren 3.2 gebildet.

In der Figur 3b ist ebenfalls eine Anordnung der auf dem Schaltträger 1 Spuren bildenden Mitnehmerpaare 3.1, 3.2 für vier in zwei Reihen angeordnete Schaltfinger und Kipphebel dargestellt. Die dargestellte Anordnung von den großen und den kleinen Mitnehmerabstand aufweisenden Mitnehmerpaare 3.1, 3.2 entspricht dem Fall, daß die zwei Schaltfinger einer Gruppierung so geformt und über dem Schaltträger 1 angeordnet sind, daß zwischen den zwei Schaltfingern noch eine Spur von Mitnehmerpaaren 3.1, 3.2 angeordnet ist.

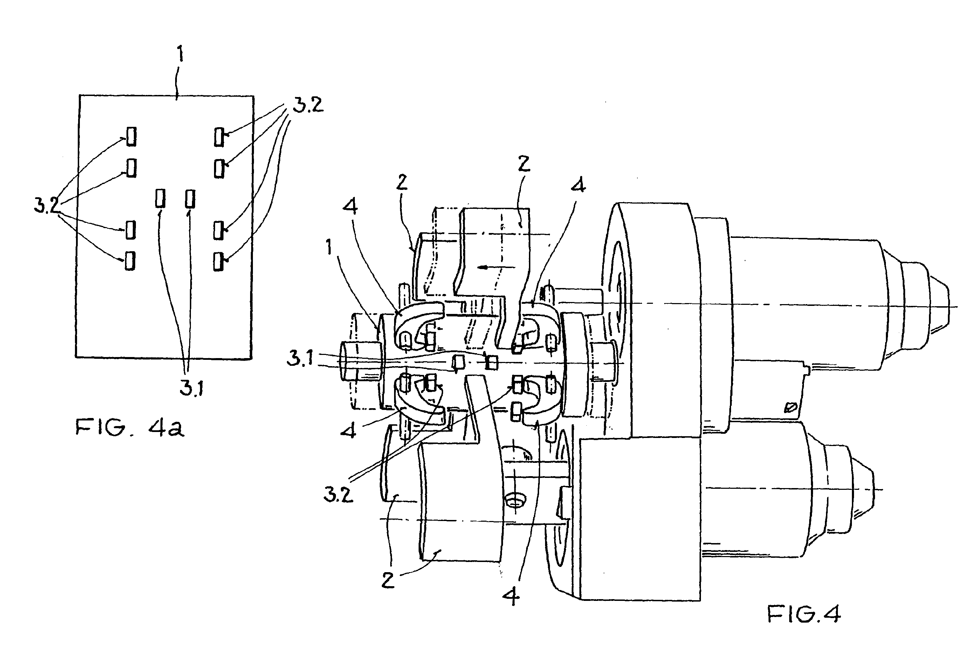

In der Figur 4 ist ebenfalls ein als Zylinder ausgeführter Schaltträger 1 dargestellt, der ebenso vier Schaltfinger 2 und die zugehörigen Kipphebel 4 betätigt. Das Handschaltgetriebe ist so ausgeführt, daß die vier Schaltfinger 2 und die jeweils zwei zugehörigen Kipphebel 4 radial um den zylindrischen Schaltträger 1 angeordnet sind. Dabei werden alle vier Schaltfinger 2 von einer einzigen Gruppierung von Mitnehmerpaaren 3.1, 3.2 betätigt, wobei diese Gruppierung auch hier nur ein den kleinen Mitnehmerabstand aufweisendes Mitnehmerpaar 3.1 enthält. Der zylindrisch ausgeführte Schaltträger 1 weist dabei nur ein viertel der Länge des in Figur 2 beschriebenen Schaltträger auf, wobei trotzdem die volle Funktionalität gegeben ist.

In der Figur 4a ist die Anordnung der auf dem Schaltträger 1 Spuren bildenden Mitnehmerpaare 3.1, 3.2 für vier um den zylindrischen Schaltträger 1 radial angeordnete Schaltfinger und Kipphebel dargestellt. Der Schaltträger 1 wird lediglich von einer Gruppierungen von Mitnehmerpaaren 3.1, 3.2 gebildet. Dabei sind zwischen den Mitnehmern der Mitnehmerpaare 3.1, 3.2 dieser Gruppierung immer alle vier Schaltfinger angeordnet.

Durch das erfindungsgemäße Verfahren zum Schalten eines mehrstufigen Handschaltgetriebes und durch die Vorrichtung zum Durchführen des Verfahrens wird der Wechsel einer Schaltstufe schnell und einfacher durchgeführt.

## Patentansprüche

1. Verfahren zum Schalten eines mehrstufigen Handschaltgetriebes mit einem Schaltträger (1), auf dem Schaltmittel vorgesehen sind, durch welche bei einem Wechsel der Schaltstufe durch eine Bewegung des Schaltträgers (1) eine Schaltstufe herausgenommen und/oder eine weitere Schaltstufe eingelegt wird, und wobei das Handschaltgetriebe ein Schaltgestänge mit Schaltfingern (2) aufweist und die Schaltmittel an den Schaltfingern (2) angreifen, wobei Schaltmittel für jeden Schaltfinger (2) vorgesehen werden, **dadurch gekennzeichnet, dass** ausgehend von einer beliebigen Schaltstufe durch eine erste Bewegung des Schaltträgers (1) jede andere Schaltstufe angewählt wird, während dabei die Lage aller Schaltfinger (2) unverändert bleibt.

2. Verfahren nach Anspruch 1, **dadurch gekennzeichnet, daß** die Schaltmittel auf dem Schaltträger (1) in Spuren angeordnet werden, und daß so viele Spuren auf dem Schaltträger (1) ausgebildet sind, daß jeder Schaltfinger (2) zum Einlegen einer Schaltstufe betätigt wird.

3. Mehrstufiges Handschaltgetriebe mit einem Schaltgestänge aus axial verschiebbaren Gabelwellen (5), an denen jeweils ein Schaltfinger (2) und mindestens eine Schaltgabel (6) befestigt sind, und mit einer einen Wechsel der Schaltstufe bewirkenden Schaltvorrichtung, wobei die Schaltvorrichtung mit einem Schaltträger (1) verbunden ist, auf dem als Mitnehmerpaare (3.1, 3.2) ausgebildete Schaltmittel angeordnet sind, wobei die Mitnehmer der Mitnehmerpaare (3.1, 3.2) entweder einen kleinen Mitnehmerabstand oder einen großen Mitnehmerabstand aufweisen, und daß auf dem Schaltträger (1) mindestens so viele Mitnehmerpaare (3.1, 3.2) angeordnet sind, daß durch Bewegen des Schaltträgers (1) jeder Schaltfinger (2) zwischen einem den kleinen Mitnehmerabstand aufweisenden Mitnehmerpaar (3.1) anzuordnen ist, wobei zu einem Zeitpunkt höchstens ein Schaltfinger (2) zwischen einem den kleinen Mitnehmerabstand aufweisenden Mitnehmerpaar (3.1) angeordnet ist, und wobei alle nicht zwischen einem den kleinen Mitnehmerabstand aufweisenden Mitnehmerpaar (3.1) angeordneten Schaltfinger (2) zwischen einem den großen Mitnehmerabstand aufweisenden Mitnehmerpaar (3.2) angeordnet sind, **dadurch gekennzeichnet, dass** die Mitnehmerpaare (3.1) mit dem kleinen Mitnehmerabstand dem Verschieben eines Schaltfingers (2) zum Einlegen einer Schaltstufe dienen und die Mitnehmerpaare (3.2) mit dem großen Mitnehmerabstand dem Verschieben eines Schaltfingers (2) zum Herausnehmen einer Schaltstufe dienen.

4. Handschaltgetriebe nach Anspruch 3, **dadurch gekennzeichnet, daß** das mehrstufige Handschaltgetriebe ein Gehäuse aufweist, und daß in dem Gehäuse Kipphebel (4) gelagert sind, wobei für jeden Schaltfinger (2) zwei Kipphebel (4) vorgesehen sind, die an einer Seite auf einem Mitnehmer aufliegen, und an der anderen Seite auf einem Schaltfinger (2) aufliegen, und die bei einem über die Schaltvorrichtung zum Wechsel der Schaltstufe herbeigeführten Verschieben des Schaltträgers (1) ein Verschieben der Schaltfinger (2) gegen die Bewegungsrichtung des Schaltträgers (1) bewirken.

5. Handschaltgetriebe nach Anspruch 3 oder 4, **dadurch gekennzeichnet, daß** die Mitnehmerpaare (3.1, 3.2) auf dem Schaltträger (1) In Spuren angeordnet sind, und daß zwischen den Spuren von Mitnehmerpaaren (3.1, 3.2) Leerspuren ausgebildet sind, die keine Mitnehmerpaare (3.1, 3.2) aufweisen.

6. Handschaltgetriebe nach einem der Ansprüche 3 bis 5, **dadurch gekennzeichnet, daß** auf dem Schaltträger (3.1, 3.2) mindestens eine zusätzlich Spur mit nur den großen Abstand aufweisenden Mitnehmerpaaren (3.2) angeordnet ist.

7. Handschaltgetriebe nach einem der Ansprüche 3 bis 6, **dadurch gekennzeichnet, daß** die einen Wechsel der Schaltstufe bewirkende Schaltvorrichtung als ein In einer Schaltkulisse geführter Schalthebel und/oder als Plus/Minus - Knopf und/oder als Auf/Ab - Hebel ausgebildet ist, der den Schaltträger (1) mechanisch über ein Gestänge oder elektronisch über mindestens einen Elektromotor bewegt.

8. Handschaltgetriebe nach einem der Ansprüche 3 bis 7, **dadurch gekennzeichnet, daß** der Schaltträger (1) als ebenes Rechteck ausgebildet ist, das zum Wechsel der Schaltstufe in seiner Ebene bewegbar ist.

9. Handschaltgetriebe nach einem der Ansprüche 3 bis 7, **dadurch gekennzeichnet, daß** der Schaltträger (1) als Zylinder ausgebildet Ist, und der zum Wechsel der Schaltstufe drehbar und axial verschiebbar ist.

10. Handschaltgetriebe nach Anspruch 9, **dadurch gekennzeichnet, daß** in dem Gehäuse des Handschaltgetriebes zur Drehung des zylindrischen Schaltträgers (1) ein erster Elektromotor (8) angeordnet ist und zum axialen Verschleben des Schaltträgers ein zweiter Elektromotor (9) oder eine elektromechanische Stellvorrichtung angeordnet ist.

## Claims

1. A procedure for switching a multi-stage manual transmission with a shift carrier (1) on which shifting devices are provided, via which when a shift stage is changed by a movement of the shift carrier (1), a shift stage is removed and/or a further shift stage is engaged, and whereby the manual transmission comprises a cam control mechanism with shift fingers (2) and the shifting devices engage with the shift fingers (2), whereby shifting devices are provided for each shift finger (2), **characterized in that** starting from any shift stage, via an initial movement of the shift carrier (1), any other shift stage is selected, while at the same time, the position of all shift fingers (2) remains unchanged.

2. A procedure according to claim 1, **characterized in that** the shifting devices on the shift carrier (1) are arranged in tracks, and that a sufficient quantity of tracks is provided on the shift carrier (1) that each shift finger (2) is activated in order to engage a shift stage.

3. A multi-stage manual transmission with a cam control mechanism consisting of axially displaceable forked shafts (5), on which in each case, one shift finger (2) and at least one shift fork (6) are attached, and with a shifting facility which produces a change in the shift stage, whereby the shifting facility is connected with a shift carrier (1), on which shifting devices are arranged as driver pairs (3.1, 3.2), whereby the drivers of the driver pairs (3.1, 3.2) comprise either a low driver distance or a high driver distance, and that on the shift carrier (1) at least a sufficient quantity of driver pairs (3.1, 3.2) is arranged that when the shift carrier (1) is moved, each shift finger (2) should be arranged between a driver pair (3.1) which comprises the low driver distance, whereby at any one point in time, a maximum of one shift finger (2) is arranged between a driver pair (3.1) which comprises the low driver distance, and whereby all shift fingers (2) which are not arranged between the driver pair (3.1) which comprises the low driver distance are arranged between a driver pair (3.2) which comprises the high driver distance, **characterized in that** the driver pairs (3.1) with the low driver distance are used to displace a shift finger (2) in order to engage a shift stage, and the driver pairs (3.2) with the high driver distance are used to displace a shift finger (2) to remove a shift stage.

4. A manual transmission according to claim 3, **characterized in that** the multi-stage manual transmission comprises a housing and that in the housing, rocking arms (4) are arranged, whereby for each shift finger (2), two rocking arms (4) are provided, which lie on one side on a driver, and lie on the other side on a shift finger (2), and which when a displacement of the shift carrier (1) is caused by the shifting facility in order to change the shift stage produce a displacement of the shift fingers (2) against the direction of movement of the shift carrier (1).

5. A manual transmission according to either of claims 3 or 4, **characterized in that** the driver pairs (3.1, 3.2) on the shift carrier (1) are arranged in tracks, and that between the tracks of driver pairs (3.1, 3.2), empty tracks are arranged, which comprise no driver pairs (3.1, 3.2).

6. A manual transmission according to any one of claims 3 to 5, **characterized in that** on the shift carrier (1) at least one additional track with only the driver pairs (3.2) which comprise the high distance is arranged.

7. A manual transmission according to any one of claims 3 to 6, **characterized in that** the shifting facility which produces a change in the shift stage is designed as a shift lever and/or as a plus/minus button and/or as an up/down lever in a shifting gate, which moves the shift carrier (1) mechanically over a rod assembly or electronically via at least one electric motor.

8. A manual transmission according to any one of claims 3 to 7, **characterized in that** the shift carrier (1) is designed as a level rectangle, which can be moved in order to change the shift stage on its plane.

9. A manual transmission according to any one of claims 3 to 7, **characterized in that** the shift carrier (1) is designed as a cylinder, and that in order to change the shift stage, it is rotatable and can be displaced axially.

10. A manual transmission according to claim 9, **characterized in that** in the housing of the manual transmission, a first electric motor (8) is arranged in order to rotate the cylindrical shift carrier (1), and a second electric motor (9) or an electromechanical control device is arranged in order to axially displace the shift carrier.

## Revendications

1. Procédé pour la commande d'une boîte de vitesse manuelle étagée avec un support de commande (1), sur lequel des moyens de commande sont prévus par lesquels, lors d'un changement du rapport par un mouvement du support de commande (1), un autre rapport est engagé et/ou désengagé, et la boîte de vitesse manuelle présentant une armature de commande avec doigts de commande (2), et les moyens de commande s'engageant sur les doigts de commande (2), des moyens de commande étant prévus pour chaque doigt de commande (2), **caractérisé en ce que**, en partant d'un rapport quelconque, chaque autre rapport est sélectionné par un premier mouvement du support de commande (1), tandis qu'à cette occasion la position de tous les doigts de commande (2) reste inchangée.

2. Procédé selon la revendication 1, **caractérisé en ce que** les moyens de commande sont disposés en pistes sur le support de commande (1), et **en ce qu'**un tel nombre de pistes est formé sur le support de commande (1) que chaque doigt de commande (2) est actionné pour l'engagement d'un rapport.

3. Boîte de vitesse manuelle étagée avec une armature de commande se composant d'arbres de fourchette (5) décalables axialement, auxquels sont respectivement fixés un doigt de commande (2) et au moins une fourchette (6), et avec un dispositif de commande déclenchant un changement de rapport, le dispositif de commande étant relié à un support de commande (1), sur lequel des moyens de commande formés en paires de tiges d'entraînement (3.1, 3.2) sont disposés, les tiges d'entraînement des paires de tiges (3.1, 3.2) présentant soit un petit écart entre les tiges, soit un grand écart entre les tiges, et un nombre tel de paires de tiges d'entraînement (3.1, 3.2) étant disposé sur le support de commande que, par le déplacement du support de commande (1), chaque doigt de commande (2) doit être placé entre une paire de tiges d'entraînement (3.1) présentant le petit écart entre les tiges, au plus un doigt de commande (2) étant placé entre une paire de tiges d'entraînement (3.1) présentant le petit écart entre les tiges à un instant donné, et tous les doigts de commande (2) non placés entre les paires de tiges d'entraînement (3.1) présentant le petit écart entre les tiges étant disposés entre une paire de tiges d'entraînement (3.2) présentant le grand écart entre les tiges, **caractérisée en ce que** les paires de tiges d'entraînement (3.1) avec le petit écart entre les tiges servent au déplacement d'un doigt de commande (2) pour l'engagement d'un rapport et les paires de tiges d'entraînement (3.2) avec le grand écart entre les tiges servent au déplacement d'un doigt de commande (2) pour le désengagement d'un rapport.

4. Boîte de vitesse manuelle selon la revendication 3, **caractérisée en ce que** la boîte de vitesse manuelle étagée présente un boîtier et **en ce que** des culbuteurs (4) sont placés dans le boîtier, deux culbuteurs (4) étant prévus pour chaque doigt de commande (2), lesquels sont posés d'un côté sur une tige d'entraînement, et sont posés de l'autre côté sur un doigt de commande (2), et lesquels déclenchent un déplacement des doigts de commande (2) en direction inverse du mouvement du support de commande (1) lors d'un déplacement du support de commande (1) entraîné par le dispositif de commande pour le changement de rapport.

5. Boîte de vitesse manuelle selon les revendications 3 ou 4, **caractérisée en ce que** les paires de tiges d'entraînement (3.1, 3.2) sont disposées en pistes sur le support de commande (1), et **en ce que** des pistes vides sont disposées entre les pistes de paires de tiges d'entraînement (3.1, 3.2), lesquelles ne présentent aucune paire de tiges d'entraînement (3.1, 3.2).

6. Boîte de vitesse manuelle selon l'une des revendications 3 à 5, **caractérisée en ce qu'**au moins une piste supplémentaire, avec les paires de tiges d'entraînement (3.2) ne présentant que le grand écart, est disposée sur le support de commande (1).

7. Boîte de vitesse manuelle selon l'une des revendications 3 à 6, **caractérisée en ce que** le dispositif de commande entraînant un changement de rapport est formé comme levier de commande introduit dans une grille de sélection et/ou comme bouton plus/moins et/ou comme levier d'engagement/de désengagement, lequel déplace mécaniquement le support de commande (1) par une armature ou électroniquement par au moins un moteur électrique.

8. Boîte de vitesse manuelle selon l'une des revendications 3 à 7, **caractérisée en ce que** le support de commande (1) est formé comme un carré plan, lequel est déplaçable sur un plan pour le changement de rapport.

9. Boîte de vitesse manuelle selon l'une des revendications 3 à 7, **caractérisée en ce que** le support de commande (1) est formé comme un cylindre, et lequel est déplaçable axialement et par rotation pour le changement de rapport.

10. Boîte de vitesse manuelle selon la revendication 9, **caractérisée en ce que**, dans le boîtier de la boîte de vitesse manuelle, un premier moteur électrique (8) est disposé pour la rotation du support de commande (1) cylindrique, et un deuxième moteur électrique (9) ou un dispositif de positionnement électromécanique sont disposés pour le déplacement axial du support de commande.
